# EUROPEAN PATENT APPLICATION

(11) **EP 1 630 797 A2**
(43) Date of publication of application: **01.03.2006**
(21) Application number: 05253837.8
(22) Date of filing: 21.06.2005
(51) Int. Cl.: G11B 7/08

(54) **Objective lens driving device settled within a height limit of an optical pickup unit**

(30) Priority: 30.08.2004 JP 2004250612
(71) Applicant: Mitsumi Electric Co., Ltd., Tama-Shi, Tokyo (JP)
(72) Inventor: Yamada, Tsukasa, c/o Mitsumi Electric Co., Ltd, Tama-shi, Tokyo (JP)
(74) Representative: Haley, Stephen

(57) **Abstract**

In an objective lens driving device (100) of a symmetry type having an object lens (2), an objective lens holder (1) for holding the objective lens, and a damper base (10) apart from the objective lens holder in a tangential direction (Tg), a suspension member elastically supports the objective lens holder with respect to the damper base. The suspension member (11) consists of four suspension wires (11) disposed on both sides of the damper base (10) and the objective lens holder (1). The suspension member (11) inclines upward in a direction from the damper base to the objective lens holder by a predetermined angle (θ) in an inactive state.

## Description

This application claims priority to prior Japanese patent application JP 2004-250612, the disclosure of which is incorporated herein by reference.

This invention relates to an objective lens driving device suitable for use in an optical pickup unit of an optical disc drive and, in particular, to an objective lens holder for use in the objective lens driving device.

As well know in the art, an optical disc drive is a device for reading/writing information from/into an optical disc (CD, CD-ROM, CD-R/RW, DVD-ROM, DVD±R/RW, Blu-lay, HD DVD, or the like). In order to achieve reading/writing the information from/into the optical disc, the optical disc drive of this type comprises an optical pickup unit for irradiating a laser beam onto the optical disc and for detecting its reflected beam.

In the manner which is well known in the art, in DVD apparatuses, there is one in which a particular optical pickup unit is mounted in order to enable to record/reproduce data in/from both of the DVD and the CD. The particular optical pickup unit of the type is for carrying out recording or reproducing by selectively using two kinds of laser beams, namely, a laser beam having short wavelength (wavelength band of 650 nm) for the DVD and a laser beam having a long wavelength (wavelength band of 780 nm) for the CD. The particular optical pickup unit is called a two-wavelength handling optical pickup unit.

One of the two-wavelength handling optical pickup units of the type described comprises a first laser diode (LD) for emitting the laser beam (a first laser beam) having the short wavelength for the DVD and a second laser diode (LD) for emitting the laser beam (a second laser beam) having the long wavelength for the CD. Such a two-wavelength handling optical pickup unit is disclosed in Japanese Unexamined Patent Application Publication No. 2003-272220 or JP-A 2003-272220.

However, if the first laser diode and the second laser diode are formed as separate parts, it is inconvenient that the two-wavelength handling optical pickup unit comprises a lot of parts and is large-scale. In order to cope with such problems, a new laser diode comprising, as one part (one chip), the first laser diode and the second laser diode is developed and proposed, for example, in Japanese Unexamined Patent Application Publication No. 11-149652 or JP-A 11-149652. Such a new laser diode is called a one-chip type laser diode. It is possible to miniaturize the two-wavelength handling optical pickup unit by using the one-chip type laser diode.

However, inasmuch as the one-chip type laser diode has a first emission point for emitting the first laser beam and a second emission point for the second laser beam that are apart from each other by a predetermined distance of, for example, 100µm, the first laser beam and the second laser beam are emitted in parallel with they apart from each other by the predetermined distance. Accordingly, various problems can arise when one of two laser beams apart from each other is irradiated on the optical disc. It is therefore preferable to guide the first laser beam and the second laser beam to the same optical axis by using any optical axis coinciding means.

A two-wavelength laser module solving such a problem is proposed, for example, in Japanese Unexamined Patent Application Publication No. 2001-284740 or JP-A 2001-284740. The proposed two-wavelength laser module comprises a first laser source for emitting a first laser beam having a first wavelength, a second laser source for emitting a second laser beam having a second wavelength different from the first wavelength, and optical axis coinciding means for receiving one of the first laser beam and the second laser beam to emit a laser beam on the same optical axis. In the two-wavelength laser module, the first laser source, the second laser source, and the optical axis coinciding means are mounted in a package.

In addition, in the above-mentioned one-chip type laser diode, when the two laser beams apart from each other are irradiated on the optical disc, return beams reflected thereon (disc's reflected beams) are also reflected (returned) with optical axes of them deviated from each other. Accordingly, in this state as it is, it is impossible to receive the disc's reflected beams at one reception position in a photodetector.

An optical pickup unit solving this problem is also proposed, for example, in Japanese Unexamined Patent Application Publication No. 2002-288870 or JP-A 2002-288870. The proposed optical pickup unit comprises a two-wavelength package laser diode, an optical system, and an optical axis combining element. The two-wavelength package laser diode emits first and second laser beams, which have first and second wavelengths different from each other, in parallel from first and second emission points apart from each other by a predetermined distance, respectively. The optical system is for guiding the first and the second laser beams to an optical disc and is for transmitting first and second return beams having deviated optical axes incident from the optical disc. The optical axis combining element guides the first and the second return beams transmitted through the optical system to the photodetector so that the deviated optical axes are coincided at one reception position of the photodetector.

At any rate, the optical disc drive of the type described develops a tendency to a thin type (a slim type or a ultra-slim type) so as to have a low height size. As a result, it is necessary to thin an optical pickup actuator which is a main portion of the optical pickup unit.

In general, an optical pickup unit comprises a laser beam source for emitting a laser beam and an optical system for guiding the emitted laser beam to an optical disc and for guiding its reflected beam to a photodetector. The optical system includes an objective lens disposed so as to face the optical disc.

It is necessary for the objective lens used in the optical pickup unit to accurately control in position with respect to a focus direction along an optical axis and a track direction along a radial direction of the optical disc to thereby accurately focus the laser beam on a track of a recording surface of the rotating optical disc. These controls are called a focusing control and a tracking control, respectively. Further, following improvement in recording density, there have recently been increasing demands for removing or suppressing the influence caused by warping of the optical disc. In view of this, it is also necessary that the objective lens be subjected to a so-called tilting control.

The above-mentioned optical pickup actuator is a device for enabling the focusing control, the tracking control, and the tilting control. The optical pickup actuator is called an objective lens driving device. In the objective lens driving device, an objective lens holder holding the objective lens is elastically supported by a suspension member with respect to a damper base. The suspension member consists of a plurality of suspension wires disposed both sides of the damper base and the objective lens holder.

Now, the objective lens driving devices are classified into a so-called symmetry type and a so-called asymmetry type. The objective lens driving devices of the symmetry type are ones wherein coils and a magnetic circuit including magnets are symmetrically disposed with respect to the objective lens as a center. The objective lens driving devices of the asymmetry type are ones wherein the coils and the magnetic circuit including magnets are asymmetrically disposed with respect to the objective lens.

One of the objective lens driving devices of the symmetry type is disclosed, for example, in Japanese Unexamined Patent Application Publication No. 2001-93177 or JP-A 2001-93177. According to the JP-A 2001-93177, the objective lens driving device of the symmetry type comprises an objective lens holder for holding an objective lens, a focusing coil wound around the objective lens holder, tracking coils affixed to the objective lens holder at outer sides in a tangential direction of an optical disc, and tilting coils affixed to the objective lens holder at both sides in a radial direction of the optical disc. These coils are partly located in gaps of the magnetic circuit. With this structure, the objective lens driving device of the symmetry type is capable of finely controlling a position and an inclination of the objective lens by controlling currents flowing through the respective coils. In addition, inasmuch as it is necessary to affix the tracking coils and the tilting coils to the sides of the objective lens holder, each of the tracking coils and the tilting coils comprises an air-core coil.

In the objective lens driving device of the symmetry type, the suspension member (the plurality of suspension wires) is provided so as to maintain horizontality in an inactive state. Specifically, the objective lens driving device is divided into a movable portion including the objective lens holder for holding the objective lens and a fixed portion including the damper base. The movable portion is elastically supported by the suspension member (the plurality of suspension wires) with respect to the damper base. The suspension member (the plurality of suspension wires) is disposed so as to extend in parallel with a horizontal plane between the damper base and the objective lens holder.

In the manner which is described above, the optical pickup unit itself develops a tendency to a thin type (a slim type or a ultra-slim type). In addition, there is a case of handling multi-wavelengths in one optical pickup unit such as the two-wavelength handling optical pickup unit. In such a case, it is necessary for the optical pickup unit to settle the objective lens driving unit within a height limit thereof.

However, inasmuch as the plurality of suspension wires are disposed so as to maintain the horizontality in the inactive state in the conventional objective lens driving device of the symmetry type, the conventional objective lens driving device of the symmetry type is disadvantageous in that it is difficult to settle the objective lens driving unit within the height limit (an upper limit) of the optical pickup unit. This is because a height (an upper surface) of the damper base for supporting the plurality of suspension wires becomes a height which is just the height limit of the optical pickup unit. In addition, as a result, in the conventional objective lens driving device of the symmetry type, it is impossible to cover an upper surface of all of the fixed portion except for the movable portion and it is impossible to prevent the suspension wires from deforming or the like due to shock or the like.

It is therefore an object of the present invention to provide an objective lens driving device of a symmetry type which is capable of settling it within a height limit of an optical pickup unit.

It is another object of the present invention to provide an objective lens driving device of a symmetry type which is capable of covering an upper surface of all of a fixed portion.

Other objects of this invention will become clear as the description proceeds.

On describing the gist of this invention, it is possible to be understood that an objective lens driving device of a symmetry type comprises an objective lens, an objective lens holder for holding the objective lens, a damper base apart from the objective lens holder in a tangential direction, and a suspension member elastically supporting the objective lens holder with respect to the damper base. The suspension member consists of a plurality of suspension wires disposed on both sides of the damper base and the objective lens holder. According to this invention, the suspension member inclines upward in a direction from the damper base to the objective lens holder by a predetermined angle in an inactive state.

In the afore-mentioned objective lens driving device, the objective lens driving device may further comprise a top cover for covering an upper surface of all of a fixed portion including the damper base expect for a movable portion including the objective lens holder. Preferably, the predetermined angle may be laid in a range between zero degree, exclusive, and five degrees, inclusive. The objective lens driving device may be mounted on a two-wavelength handling pickup unit enabling to record/reproduce data in/from a plurality of optical discs using different wavelengths. In this event, a position of the objective lens desirably may be defined, in the inactive state, so that a distance between the optical discs and the objective lens becomes an intermediate distance between an operating distance of a first optical disc using a first wavelength and another operating distance of a second optical disc using a second wavelength different from the first wavelength.

In the Drawings;
Fig. 1 is a perspective view of a conventional objective lens driving device;
Fig. 2 is a side view of the conventional objective lens driving device illustrated in Fig. 1;
Fig. 3 is a perspective view of an objective lens driving device according to an embodiment of this invention;
Fig. 4 is a perspective view of an optical pickup unit including the objective lens driving device illustrated in Fig. 3 seen from a top surface side;
Fig. 5 is a perspective view of the optical pickup unit illustrated in Fig. 4 seen from a bottom surface side;
Fig. 6A is a perspective view of an upper member of an objective lens holder for use in the objective lens driving device illustrated in Fig. 3;
Fig. 6B is a perspective view of a lower member of the objective lens holder for use in the objective lens driving device illustrated in Fig. 3;
Fig. 7 is a perspective view of a state where two tilting coils are wound around the lower member illustrated in Fig. 6B;
Fig. 8 is a perspective view of a state where two focusing coils are wound around the lower member in a state shown in Fig. 7;
Fig. 9 is a perspective view of the objective lens holder where the upper member illustrated in Fig. 6A is mounted in the lower member in a state shown in Fig. 8;
Fig. 10 is a perspective view showing a state where four tracking coils are wound around the objective lens holder in a state shown in Fig. 9;
Fig. 11 is a perspective view showing a state where an objective lens and two disc protectors are mounted on the objective lens holder in a state shown in Fig. 10;
Fig. 12 is a side view of the objective lens driving device illustrated in Fig. 3
Fig. 13 is a perspective view of the objective lens driving device illustrated in Fig. 3 in a state where a top cover of an optical pickup unit is mounted (assembled) thereon;
Fig. 14 is a longitudinal sectional view of the objective lens driving device illustrated in Fig. 13 with a tongue portion of an optical base and a rising mirror;
Fig. 15 is a perspective view, partly in cross section, of the objective lens driving device illustrated in Fig. 13 with the tongue portion of the optical base and the rising mirror; and
Fig. 16 is a side view showing a position relationship between the objective lens driving device illustrated in Fig. 3 and optical discs of CD/DVD.

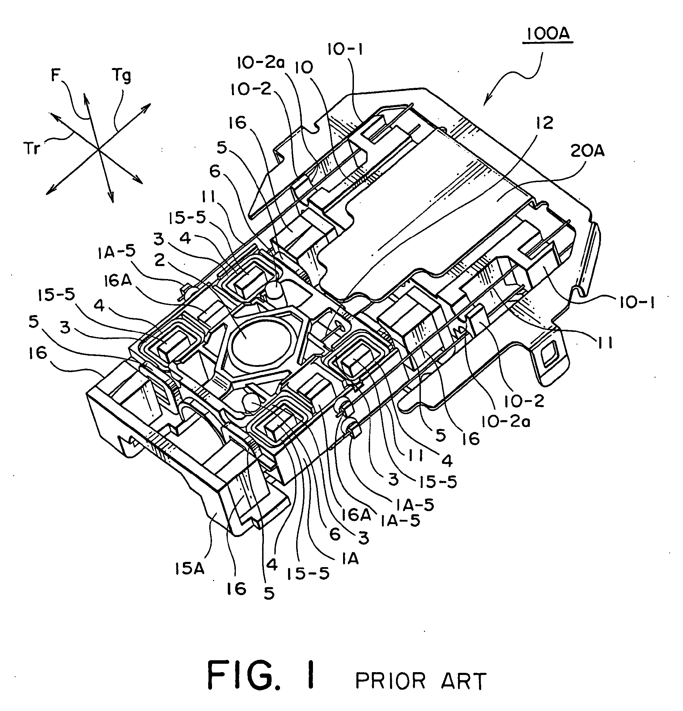

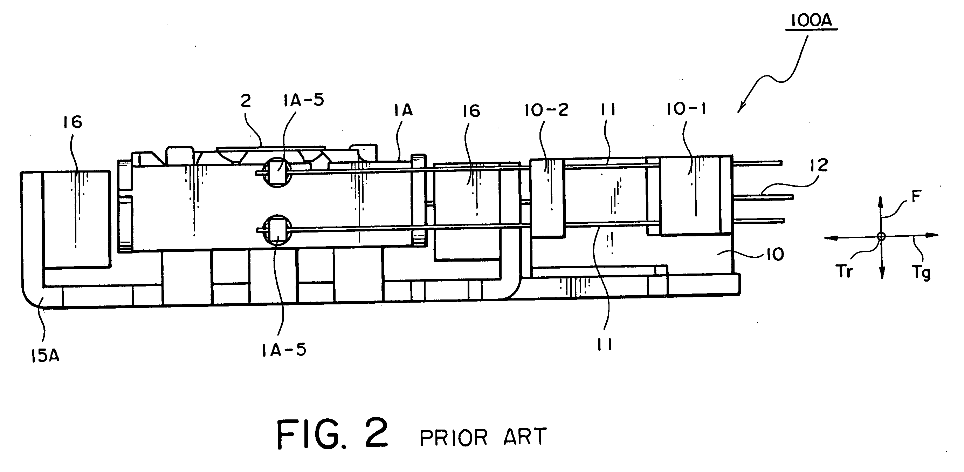

Referring to Figs. 1 and 2, a conventional objective lens driving device 100A will be described at first in order to facilitate an understanding of the present invention. Fig. 1 is a perspective view of the conventional objective lens driving device 100A. Fig. 2 is a side view of the conventional objective lens driving device 100A.

The objective lens driving device 100A comprises an objective lens holder 1A having a substantially rectangular parallelepiped shape. The objective lens holder 1A comprises a lens fitting portion for fitting an objective lens 2 at a center thereof. The lens fitting portion has a through hole. The objective lens holder 1A has, at the four corners, four main openings for receiving four tilting coils 4 and four focusing coils 3. The four openings are also for exposing yoke pieces 15-4 of a yoke 15A. In addition, the objective lens holder 1A has two auxiliary openings for receiving two auxiliary magnets 16A at both sides in a tracking direction Tr.

The objective lens holder 1A has four outer walls. At two outer walls in parallel in the tracking direction Tr or a width direction of the objective lens holder 1A, four tracking coils 5 are attached in positions corresponding to the above-mentioned main openings.

The objective lens holder 1A is elastically supported by a damper base 10 through a suspension member consisting of four suspension wires 11 extending in a tangential direction Tg. In other words, the four suspension wires 11 are disposed so as to maintain horizontality along a horizontal plane defined by the tangential direction Tg and the tracking direction Tr. The damper base 10 has two supporting portions 10-1 at two side walls in parallel in the tangential direction Tg. Each of the two supporting portions 10-1 is for supporting ends of the corresponding two suspension wires 11. An end of each suspension wire 11 penetrates the corresponding supporting portion 10-1 and is adhesively fixed in a penetrated state. At inner sides of the supporting portions 10-1, ends of two lead wires 12 are attached to the damper base 10. The damper base 10 has two damper portions 10-2 apart from the supporting portions 10-1 in the tangential direction Tg toward the objective lens holder 1A. Each of the two damper portions 10-2 has two U-shaped ditches 10-2a at both ends in a focusing direction F, namely, up and down (a vertical direction). In the ditches 10-2a, damping material (not shown) such as silicone gel is filled.

On the other hand, at two side walls in parallel in the tangential direction Tg, the objective lens holder 1A has two supporting portions 1A-5 each of which is for supporting other ends of the two suspension wires 11. The other ends of each suspension wire 11 penetrate the corresponding supporting portion 1A-5 and are adhesively fixed to the corresponding supporting portion 1A-5 in a penetrated state.

At any rate, in the example being illustrated, the four suspension wires 11 of the suspension member are disposed on both sides of the damper base 10 and the objective lens holder 1A. The suspension member elastically supports the objective lens holder 1A with respect to the damper base 10.

In the manner which is well known in the art, the four suspension wires 11 and the two lead wires 12 are also used as wires for electrically connecting the above-mentioned various coils with an external circuit, namely, a driving circuit for driving the objective lens driving device 100A.

At a lower side of the objective lens holder 1A, an assembled member consisting of a yoke 15A, four main magnets 16, and the two auxiliary magnets 16A are disposed. The assembled member forms a magnetic circuit among the above-mentioned various coils. The magnetic circuit applies driving forces to the four tilting coils 4, the four focusing coils 3, and the four tracking coils 5 according to energizing to the four tilting coils 4, the four focusing coils 3, and the four tracking coils 5. The main magnets 16 are mounted on the yoke 15A at both end portions in the tangential direction Tg so as to face the four tracking coils 5. The two auxiliary magnets 16A are mounted on the yoke 15A at the both sides of the lens fitting portion in the tracking direction Tr in the manner which is described above and between the four yoke pieces 15-5.

As shown in Fig. 2, in the conventional objective lens driving device 100A, the four suspension wires 11 are disposed or assembled so as to maintain the horizontality in an inactive state. The "inactive state" is a state where any current does not flow through the above-mentioned coils 3, 4, and 5 and the movable portion (an objective lens holder assembly) including the objective lens holder 1A balances with its own weight. In other words, the four suspension wires 11 extend in the tangential direction Tg in the inactive state.

Therefore, the damper base 10 (specifically, the supporting portions 10-1 and the damper portions 10-2) has an upper surface which substantially coincides with an upper limit of the height of the optical pickup unit. As a result, it is difficult to settle the objective lens driving device 100A within the height limit of the optical pickup unit, as mentioned in the preamble of the instant specification.

Consequently, in the conventional objective lens driving device 100A, a top cover 20A for the optical pickup unit can cover only a part of the upper surface of the damper base 10. That is, the top cover 20A covers only the upper surface of the damper base 10 except for the supporting portions 10-1 and the damper portions 10-2. In other word, it is impossible for the top cover 20A to cover the upper surface of all of the fixed portion of the objective lens driving device 10OA except for the movable portion thereof. Accordingly, when shock or the like occurs, it is feared that the suspension wires 11 deform, as mentioned also in the preamble in the instant specification.

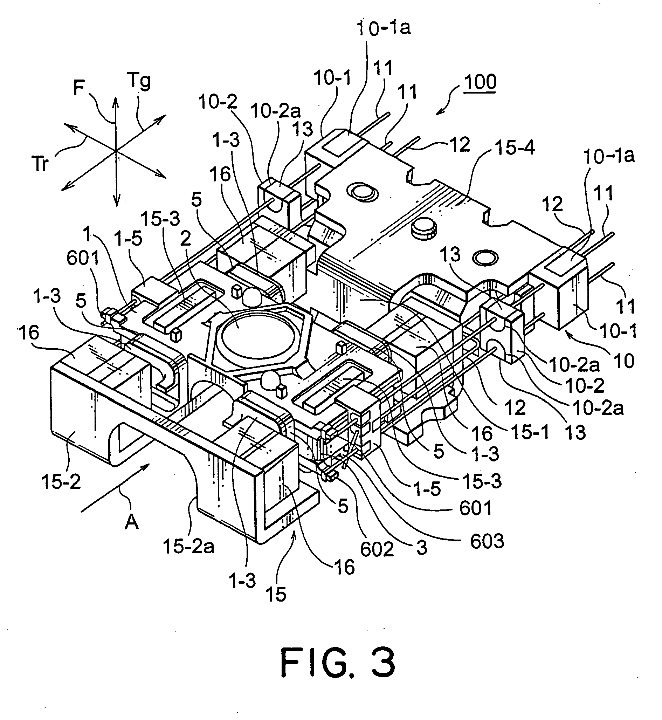

Fig. 3 is a perspective view of an objective lens driving device 100 according to an embodiment of this invention. The illustrated objective lens driving device 100 is shown in a state where a metallic top cover (which will later be described) is removed from it.

As shown in Fig. 1. the objective lens driving device 100 comprises an objective lens holder 1. The objective lens holder 1 has a lens fitting portion (which will later be described) for fitting an objective lens 2 at a center thereof. The lens fitting portion has a through hole. The objective lens holder 1 comprises a pair of main bobbin portions (which will later be described) for wining two tilting coils (which will later be described) and two focusing coils 3 at both sides of the lens fitting portion in a tracking direction Tr.

Each main bobbin portion has an opening for exposing a part (which will later be described) of a yoke. The objective lens holder 1 has four outer walls. The objective lens holder 1 comprises four sub bobbin portions 1-3 for winding four tracking coils 5 at two outer walls in parallel in the tracking direction Tr or a width direction in positions corresponding to the above-mentioned main bobbin portions, respectively.

In the example being illustrated, the objective lens holder 1 is elastically supported through four suspension wires 11 by a damper base 10. The damper base 10 is apart from the object lens holder 1 in a tangential direction Tg. Specifically, the damper base 10 has two supporting portions 10-1 at two side walls in parallel in the tangential direction Tg. Each of the two supporting portions 10-1 is for supporting ends of the corresponding two suspension wires 11. An end of each suspension wire 11 penetrates the corresponding supporting portion 10-1 and is adhesively fixed at a concave portion 10-1a. Concave portions 10-1 a are formed in the supporting portion 10-1 at upper and lower surfaces thereof. At inner sides of the supporting portions 10-1, ends of two lead wires 12 are attached to the damper base 10. The damper base 10 has two damper portions 10-2 apart from the supporting portions 10-1 in the tangential direction Tg toward the objective lens holder 1. Each of the two damper portions 10-2 has two U-shaped ditches 10-2a at both sides in a focusing direction F. In the ditches 10-2a, damping material 13 such as silicone gel is filled.

On the other hand, at two side walls in parallel in the tangential direction Tg, the objective lens holder 1 has two supporting portions 1-5 each of which is for supporting other ends of the two suspension wires 11 and another end of the lead wire 12. The other ends of each suspension wire 11 and the lead wire 12 penetrate and are adhesively fixed to the corresponding supporting portion 1-5 in a penetrated state.

At any rate, in the example being illustrated, a suspension member consists of the four suspension wires 11 disposed on both sides of the damper base 10 and the objective lens holder 1. The suspension member elastically supports the objective lens holder 1 with respect to the damper base.

In the manner which is well known in the art, the four suspension wires 11 and the two lead wires 12 are also used as wires for electrically connecting the above-mentioned various coils with an external circuit, namely, a driving circuit for driving the objective lens driving device 100.

At a lower side of the objective lens holder 1, an assembled member consisting of a yoke 15 and four magnets 16 are disposed. The assembled member forms a magnetic circuit among the above-mentioned various coils. The magnetic circuit applies driving forces to the two tilting coils, the two focusing coils 3, and the four tracking coils 5 according to energizing to the two tilting coils, the two focusing coils 3, and the four tracking coils 5.

In the example being illustrated, the yoke 15 comprises a first rising portion (a first wall member) 15-1 and a second rising portion (a second wall member) 15-2. The first rising portion 15-1 is opposed to and apart from two of the four tracking coils 5 that are wound around the two sub bobbin portions 1-3 formed in one side wall of the objective lens holder 1. The second rising portion 15-2 is opposed to and apart from remaining two of the four tracking coils 5 that are wound around the two sub bobbin portions 1-3 formed in another side wall of the objective lens holder 1. The yoke 14 further comprises two third rising portions (yoke pieces) 15-3 between the first rising portion 15-1 and the second rising portion 15-2. The two third riding portions 15-3 pass through the main bobbin portions of the objective lens holder 1. The second riding portion 15-2 has an opening 15-2a for ensuring an optical path of an optical beam for the objective lens 2 fitted in the objective lens holder 1 as shown in an arrow A.

The yoke 15 comprises an extending portion 15-4 for extending in the tangential direction Tg from at a central portion of the first rising portion 15-1 to cover an upper surface of the damper base 10.

At any rate, such a yoke 15 is made of a plate member and the first through the third rising portions 15-1 to 15-4 and the extending portion 15-4 are formed by bending from a rectangular bottom portion (main portion).

Two ones of the four magnets 16 are mounted on an inner surface of the first rising portion 15-1 so as to face the two of the four tracking coils 5. Remaining two ones of the four magnets 16 are mounted on an inner surface of the second rising portion 15-2 so as to face the remaining two of the four tracking coils 5.

At any rate, the four magnets 16 are disposed along the tangential direction Tg opposite to each other and apart from each other in the tracking direction Tr so as to sandwich the objective lens holder 1 in them.

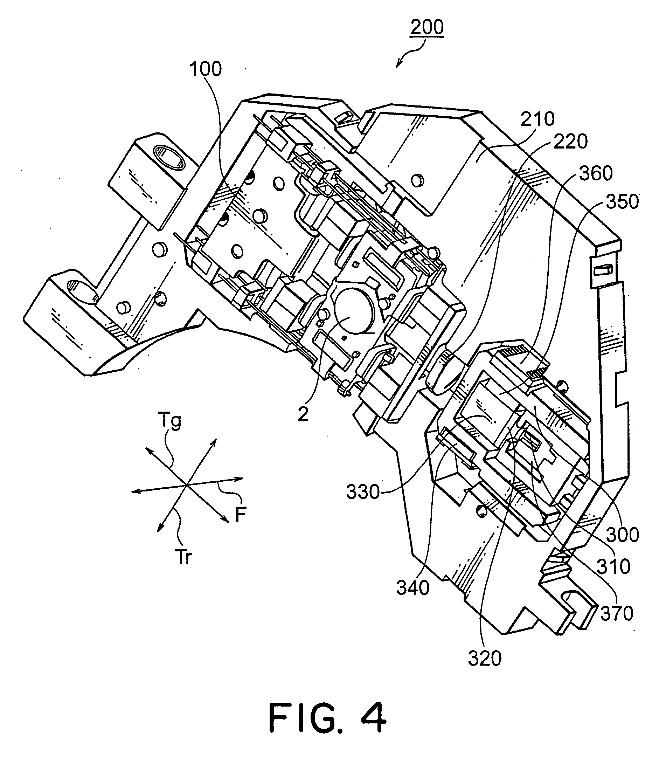

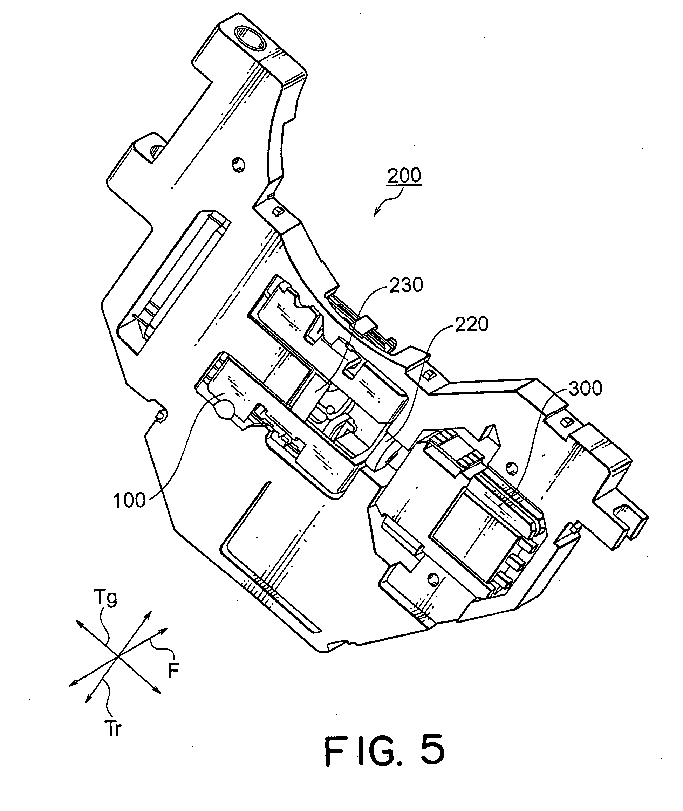

Figs. 4 and 5 are views showing an optical pickup unit 200 including the objective lens driving device 100 illustrated in Fig. 3. Fig. 4 is a perspective view of the optical pickup unit 200 seen from a top surface side. Fig. 5 is a perspective view of the optical pickup unit 200 seen from a bottom surface side. The illustrated optical pickup unit 200 is a two-wavelength handling type.

The optical pickup unit 200 comprises an optical base 210 on which the objective lens driving device 100 is mounted. The optical base 210 is movably mounted to guide bars (not shown) along a radial direction (the tracking direction Tr) of an optical disc loaded in an optical disc drive. In the optical base 210, a laser diode, a photodetector, and a predetermined optical system are mounted in the manner which will later be described. In the optical pickup unit 200, a laser beam from the laser diode is irradiated on an optical disc through the objective lens 2 and its reflected beam is guided to the photodetector.

The illustrated optical pickup unit 200 comprises a light receiving/emitting packaged type module 300 mounted on the optical base 210. The light receiving/emitting packaged type module 300 comprises a laser emitting element 310, an optical axis correcting element 320, a polarization beam splitter 330, a front monitor 340, a sensor lens 350, and the photodetector 360. The laser emitting element 310 is mounted on a metallic frame 370. The laser emitting element 310 comprises a one-chip type laser diode comprising, as one part (one chip), a first laser diode and a second laser diode. The optical axis correcting element 320 is for coinciding an optical axis of a first laser beam emitted from the first laser diode with another optical axis of a second laser beam emitted from the second laser diode.

The first laser diode is a laser diode for emitting the first laser beam having, as a first wavelength, a wavelength of 650 nm for a DVD. The second laser diode is a laser diode for emitting the second laser beam having, as a second wavelength, a wavelength of 780 nm for a CD.

Between the light receiving/emitting packaged type module 300 and the objective lens driving device 100, a collimator lens 220 is mounted in the optical base 210. Under the objective lens 2, a total reflection mirror (a rising mirror) 230 is attached to the optical base 210.

In the objective lens holder 1, the tilting coils, the focusing coils 3, and the tracking coils 5 are wound in the manner which will later be described. By suitably controlling currents flowing through these coils, the objective lens holder 1 tilts in the tracking direction Tr (rotates around an axis in parallel to the tangential direction Tg), shifts in the tracking direction Tr, or shifts in the focusing direction F on the basis of relationships between the currents and magnetic fields produced by the yoke 15 and the magnets 16.

Now, the description will proceed to operation of the two-wavelength handling optical pickup unit 200 illustrated in Figs. 4 and 5. First, the description will be made as regards operation in a case where the DVD is used as the optical disc. Subsequently, the description will later be made as regards operation in a case where the CD is used as the optical disc.

When the optical disc is the DVD, only the first laser diode is put into an active state while the second laser diode is put into an inactive state. Accordingly, only the first laser diode emits the first laser beam.

Emitted from the first laser diode for the DVD, the first laser beam passes through the optical axis correcting element 320 at which the optical axis of the first laser beam is corrected. The corrected first laser beam enters the polarization beam splitter 330. Almost of the corrected first laser beam transmits through the polarization beam splitter 330 while a part of the corrected first laser beam is reflected by the polarization beam splitter 330. Reflected by the polarization beam splitter 330, the laser beam is monitored by the front monitor 340. Transmitted through the polarization beam splitter 330, the laser beam is collimated by the collimator lens 220 into a collimated beam which enters in the objective lens 2 through the total reflection mirror 230. Transmitted through the objective lens 2, the laser beam is converged therein and is irradiated (concentrated) on a recording surface of the DVD as the optical disc.

In the manner which is well known in the art, the two-wavelength handling optical pickup unit is operable at a writing mode or a reproducing mode. When the two-wavelength handling optical pickup unit operates at the writing mode, operation thereof comes to end in the above-description. On the other hand, when the two-wavelength handling optical pickup unit operates at the reproducing mode, the following operation proceeds.

Reflected from the recording surface of the optical disc (DVD), a first return beam passes through the objective lens 2, is reflected by the total reflection mirror 230, and transmits through the collimator lens 220 to obtain a converged beam. The converged beam is reflected by the polarization beam splitter 330, transmits the sensor lens 350, and then is concentrated (received) in the photodetector 360.

Subsequently, when the optical disc is the CD, only the second laser diode is an active state while the first laser diode is an inactive state. Accordingly, only the second laser diode emits the second laser beam.

Emitted from the second laser diode for the CD, the second laser beam passes through the optical axis correcting element 320 at which the optical axis of the second laser beam is corrected. Operation after this is similar to the above-mentioned case where the optical disc is the DVD. Specifically, the corrected second laser beam enters the polarization beam splitter 330. Almost of the corrected second laser beam transmits through the polarization beam splitter 330 while a part of the corrected second laser beam is reflected by the polarization beam splitter 330. Reflected by the polarization beam splitter 330, the laser beam is monitored by the front monitor 340. Transmitted through the polarization beam splitter 330, the laser beam is collimated by the collimator lens 220 into a collimated beam which enters the objective lens 2 through the total reflection mirror 230. Transmitted through the objective lens 2, the laser beam is converged therein and is irradiated (concentrated) on a recording surface of the CD as the optical disc.

Reflected from the recoding surface of the optical disc (CD), a second return beam passes through the objective lens 2, is reflected by the total reflection mirror 230, and transmits through the collimator lens 220 to obtain a converged beam. The converged beam is reflected by the polarization beam splitter 330, transmits the sensor lens 350, and then is concentrated (received) in the photodetector 360.

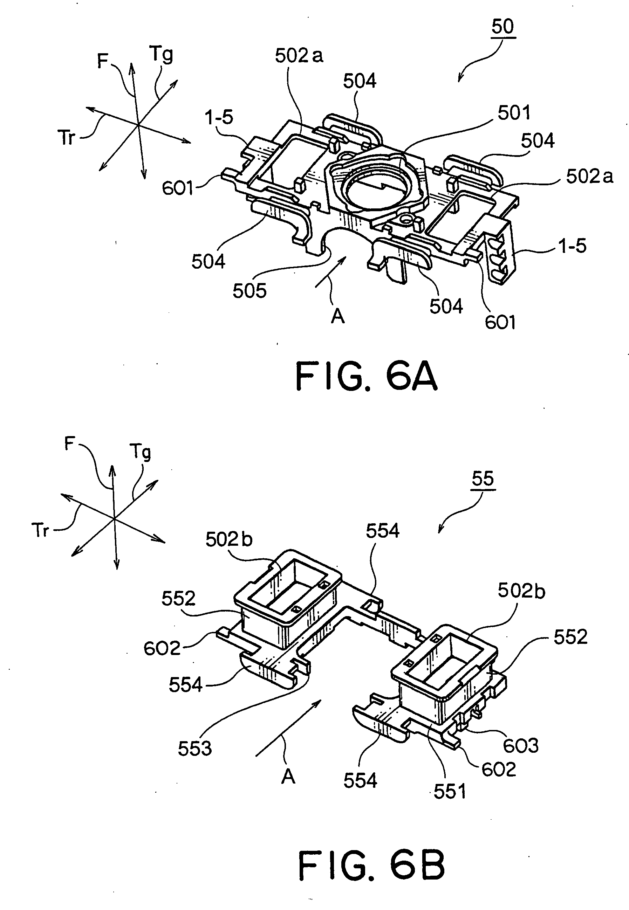

Referring to Figs. 6A and 6B, the description will proceed to the objective lens holder 1 in more detail. The objective lens holder 1 comprises an upper member 50 as shown in Fig. 6A and a lower member 55 as shown in Fig. 6B.

As shown in Fig. 6A, the upper member 50 has a substantially rectangular shape or a substantially rectangular surface which faces the lower member 55. The upper member 50 has the lens fitting portion 501 for fitting the objective lens 2. The lens fitting portion 501 has the through hole. At both sides in the tracking direction Tr with the lens fitting portion 501 sandwiched, the upper member 50 has two rectangular holes 502a for inserting the part of the yoke 15 (the third rising portion 15-3) at symmetrical positions.

The upper member 50 is provided with the two supporting portions 1-5 at the both sides in the tracking direction Tr. The two supporting portions 1-5 are for supporting the other ends of the four suspension wires 11 and the two lead wires 12. The upper member 50 has four first hook portions 504 for winding the four tracking coils 5 at the both side in the tangential direction Tg adjacent to end portions thereof. The four first hook portions 504 are formed so as to project along the tangential direction Tg. The upper member 50 has a notch (an opening) 505 for ensuring the optical path A of the laser beam.

On the other hand, the lower member 55 comprises a substantially U-shaped plate portion 551 as shown in Fig. 6B. The substantially U-shaped plate portion 551 has a symmetry shape with respect to the optical path A of the laser beam as a center. The substantially U-shaped plate portion 551 has a main surface from which the two main bobbin portions 552 project in a vertical direction or the focusing direction F. The plate portion 552 has a size which is similar to the upper member 50 with respect to at least the tangential direction Tg.

The plate portion 551 has two rectangular holes 502b for inserting the part of the yoke 15 (the third rising portions 15-3) at both end portions thereof. The main bobbin portions 552 are formed so as to enclose the respective rectangular holes 502b. The lower member 55 has a notch (an opening) 553 for ensuring the optical path A of the laser beam.

Furthermore, the lower member 55 has four second hook portions 554 (only three ones are illustrated in Fig. 4B) for winding the four tracking coils 5 at the both side in the tangential direction Tg adjacent to end portions thereof. The four second hook portions 554 are formed so as to project along the tangential direction Tg.

A combination of the first hook portion 504 and the second hook portion 564 serves as the sub bobbin portion 1-3 for winding the tracking coil 5.

Although the upper member 50 and the lower member 55 constitute the objective lens holder 1 as they are assembled with each other, the tilting coils and the focusing coils are wound around the main bobbin portions 552 in this order before assembling them with each other.

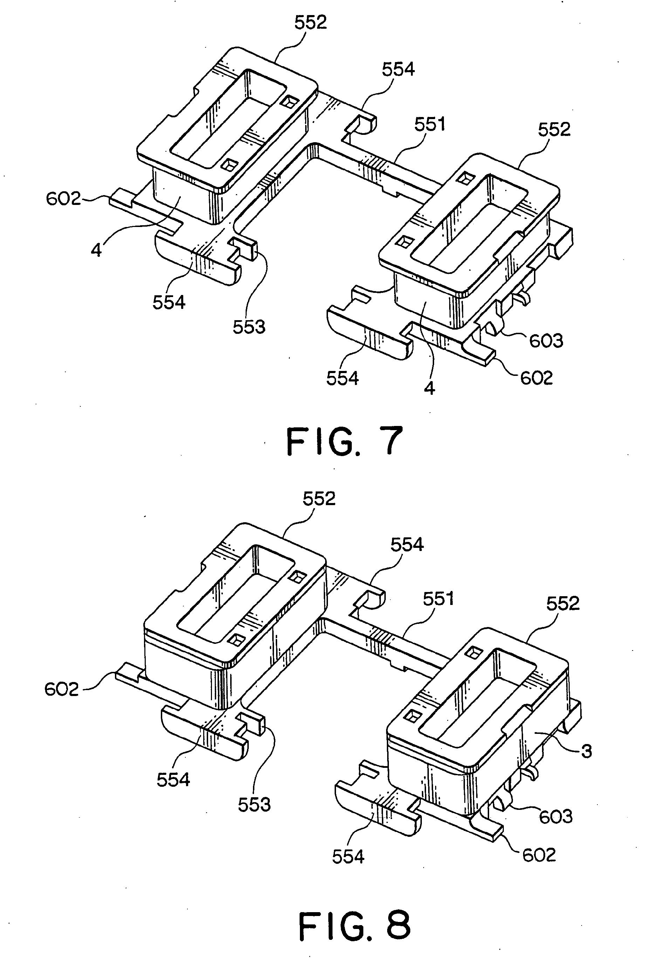

Referring now to Figs. 7 through 11, the description will proceed to process for assembling a movable portion of the objective lens driving device by winding the coils around the objective lens holder 1.

At first, as shown in Fig. 7, two tilting coils 4 are wound around the two main bobbin portions 552 in order, respectively. Thereafter, as shown in Fig. 8, the two focusing coils 3 are wound around the two main bobbin portions 552 around which the two tilting coils 4 are wound so as to overlay the two tilting coils 4.

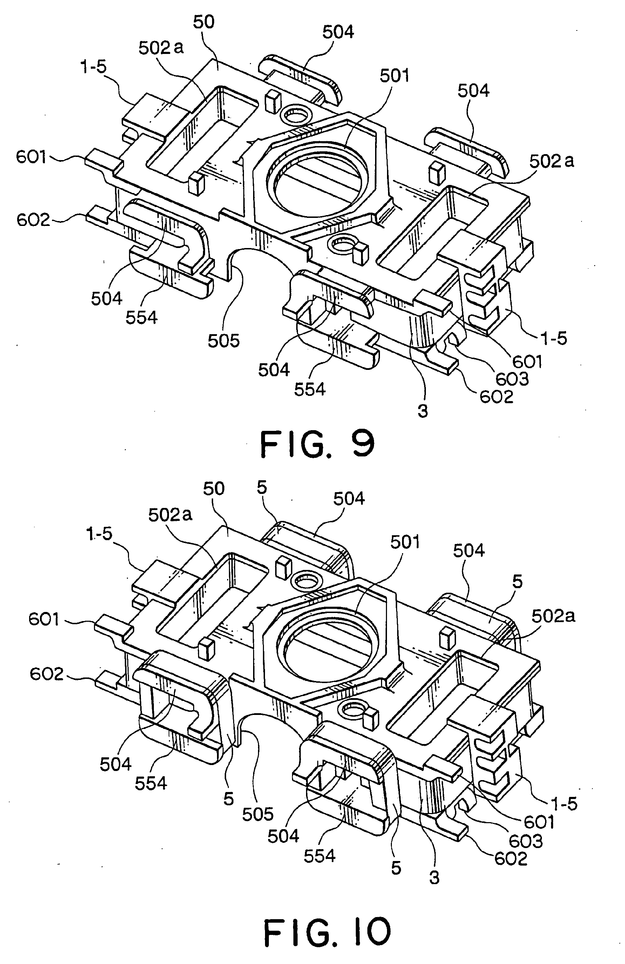

After the two tilting coils 4 and the two focusing coils 4 are wound in the lower member 55 in the manner which is described above, the upper member 50 is mounted to the lower member 55. This state is shown in Fig. 9.

In the state shown in Fig. 9, a central axis of the through hole (the lens fitting portion) 501 formed in the upper member 50 and a central axis of the notch (opening) 553 formed in the under member 55 coincide with each other. In addition, the four first hook portions 504 formed in the upper member 50 and the four second hook portions 664 formed in the lower member 55 are opposite to each other to form pairs, respectively. The four pairs of the first hook portion 504 and the second hook portion 554 constitute the four sub bobbin portions 1-3 (Fig. 3) for winding the four tracking coils 5, respectively, in the manner which is described above.

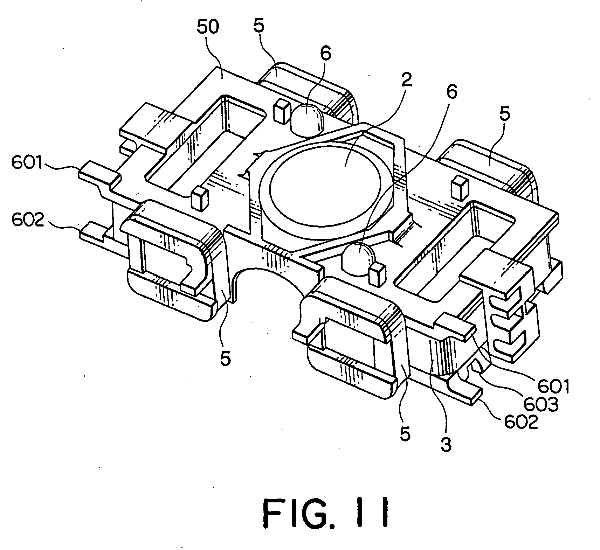

Subsequently, the four tracking coils 5 are wound around the four sub bobbin portions 103 as shown in Fig. 10 and then the objective lens 2 and two disc protectors 6 are mounted on the upper member 50 by adhering as shown in Fig. 11.

As shown in Fig. 11, a combination of the objective lens holder 1, the objective lens 2, the two focusing coils 3, the two tilting coils 4, the four tracking coils 5, and the two disc protectors 6 is called an objective lens holder assembly. That is, the objective lens holder assembly acts as a movable portion of the objective lens driving device 100.

Turning back to Fig. 3, two end portions of the two focusing coils 3 are connected to two first connection terminals 601, two end portions of the four tracking coils 5 are connected to two second connection terminals 602, and two end portions of the two tilting coils 4 are connected to two third connection terminals 603. The two first connection portions 601 are disposed in the upper member 50 at both side surfaces. The two second connection portions 602 are disposed in the lower member 55 at both side surfaces. The two third connection portions 603 are disposed in the lower member 55 at a lower surface.

Connected to the end portions of the two focusing coils 3, the two first connection terminals 601 are electrically connected to tip portions of one pair of the four suspension wires 11. Connected to the end portions of the four tracking coils 4, the two second connection terminals 602 are electrically connected to tip portions of another pair of the four suspension wires 11. The four suspension wires 11 are fixed to the two supporting portions 1-5 formed in the upper member 50 so as to penetrate the two supporting portions 1-5. Connected to the end portions of the four tilting coils 4, the two third connection terminals 603 are electrically connected to tip portions of the two lead terminals 12.

As shown in Fig. 3, after the two lead wires 12 penetrate and are fixed to the two supporting portions 1-5, the tip portions of the two lead wires 12 are bent downwards to be electrically connected to the two third connection terminals 603 for the two tilting coils 4.

Fig. 3 is the perspective view of the objective lens driving device 100 showing a state where the yoke 15 and the four magnets 16 are assembled to the objective lens holder 1 in which the coils 3, 4, and 5 are wound and the suspension wires 11 are attached. Each of the four magnets 16 is a double pole magnetized magnet.

In the manner which is easily understood from Fig. 3, the two tilting coils 4, the two focusing coils 3, and the four tracking coils 5 are partially located in magnetic gaps of the magnetic circuit comprising a combination of the yoke 15 and the four magnets 16. Accordingly, the objective lens holder 1 moves or tilts in accordance with currents flowing through the coils 3, 4, and 5. That is, it is possible to carry out the tilting control, the focusing control, and the tracking control by controlling the currents flowing through the coils 3, 4, and 5. In other words, the objective lens driving device 100 of the symmetry type is capable of finely controlling a position and an inclination of the objective lens 2 by controlling the currents flowing through the respective coils 3, 4, and 5.

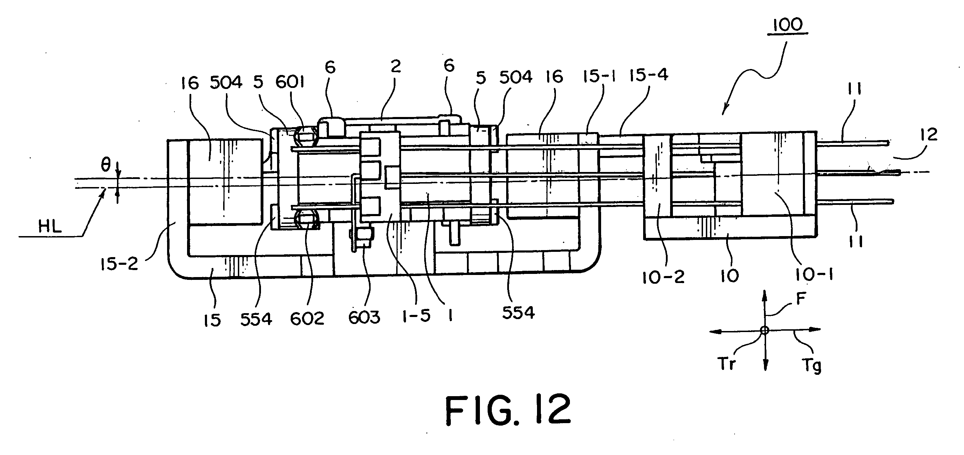

Fig. 12 shows a side view of the objective lens driving device 100 illustrated in Fig. 3. As shown in Fig. 12, each of the four suspension wire 11 in the suspension member inclines upward on the basis of a horizontal plane (a horizontal line HL) in a direction from the damper base 10 to the objective lens holder 1 by a predetermined angle θ in an inactive state. The "inactive state" is a state where a current does not flow through any of the above-mentioned various coils 3, 4, and 5 and the movable portion (the objective lens holder assembly) including the objective lens holder 1 balances with its own weight, in the manner which is described above.

The above-mentioned inclined angle θ preferably may be lain in a range between zero degree, exclusive, and five degrees, inclusive. In the example being illustrated in Fig. 12, the inclined angle θ is equal to 0.7 degrees. The reason why the inclined angle θ is not more than five degree as follows. If the inclined angle θ is not more than five degree, it is feared that a gain-frequency characteristic of the objective lens driving device 100 and a movable range are affected.

Inasmuch as the four suspension wires 11 are obliquely assembled so as to incline by the predetermined angle θ in the manner which is described above, it is possible to thin the optical pickup unit 200 without affecting the gain-frequency characteristic of the objective lens driving device 100 and the movable range.

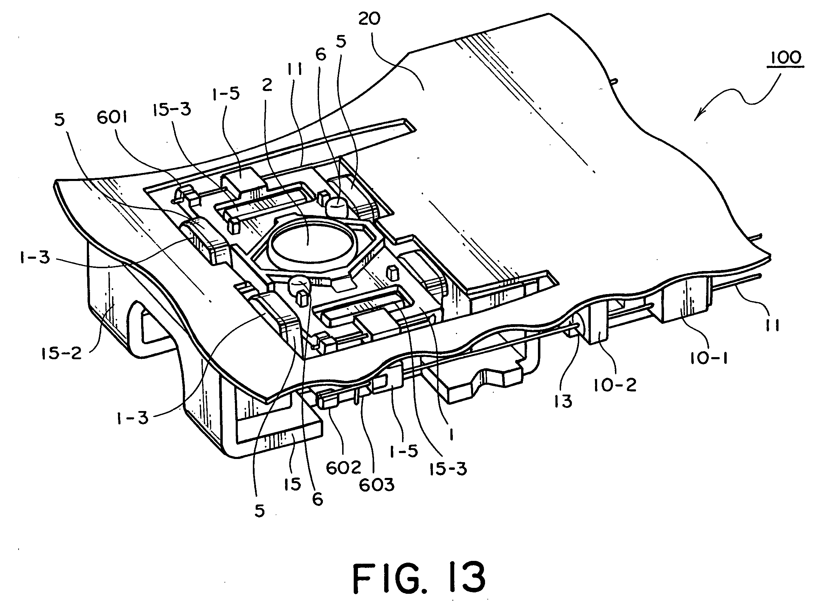

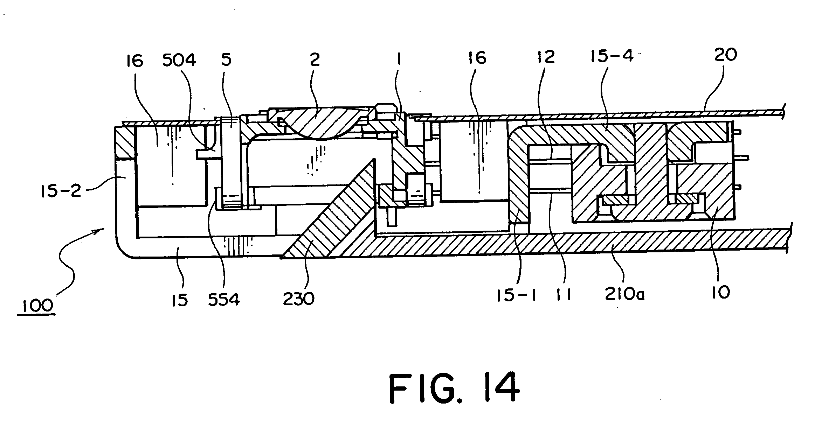

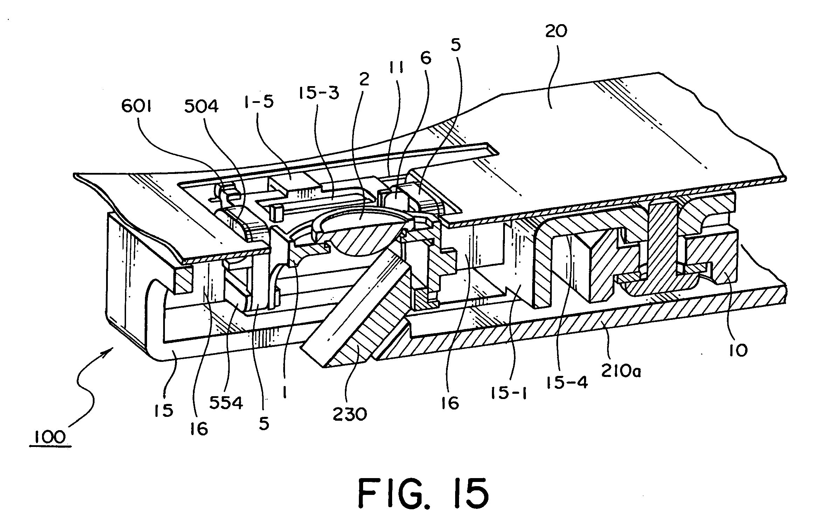

Figs. 13 through 15 collectively show the objective lens driving device 100 in a state where a top cover 20 of the optical pickup unit is mounted (assembled) thereon. Fig. 13 is a perspective view of the objective lens driving device 100. Figs. 14 and 15 are a longitudinal sectional view and a perspective view, partly in cross section, of the objective lens driving device 100 with a tongue portion 210a of the optical base 210 and the rising mirror 230, respectively.

Inasmuch as the four suspension wires 11 are obliquely assembled in the objective lens driving device 100, it is possible to mount the top cover 20 so as to cover the upper surface of all of the fixed portion except for the movable portion, as shown in Fig. 13. That is, the top cover 20 covers the upper surface of the damper base 10, of the first rising portion 15-1, the second rising portion 15-2, and the four magnets 16. In this case, inasmuch as it is possible to lower a position of the upper surface of the damper base 10 than that of prior art, it is possible to settle an upper surface of the top cover 20 within an upper limit of a height of the optical pickup unit 200. By covering the upper surface of all of the fixed portion, the object lens driving device 100 is advantageous in that it is possible to prevent the suspension wires 11 from deforming or the like due to shock or the like.

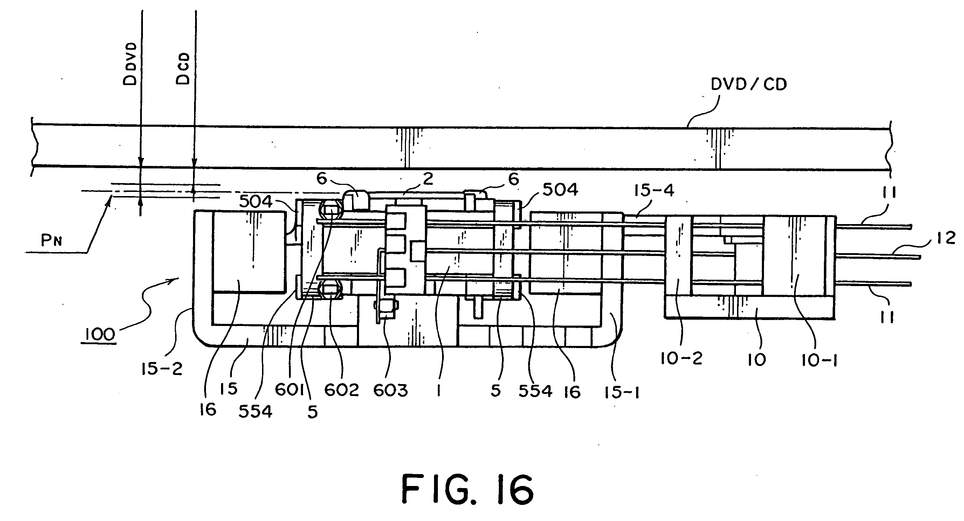

Fig. 16 shows a position relationship between the objective lens driving device 100 and optical discs of CD/DVD. The objective lens driving device 100 is assembled in the two-wavelength handling optical pickup unit 200 illustrated in Figs. 4 and 5. The two-wavelength handling optical pickup unit 200 is an optical pickup unit enable to recode/reproduce data in/from any of the DVD and the CD, in the manner which is described above.

As shown in Fig. 16, the DVD and the CD have different operating distances. That is, the DVD operating distance D_{DVD} is longer than the CD operating distance D_{CD}. The DVD operating distance D_{DVD} means an optimal standard distance between the objective lens 2 and the DVD in the focusing direction F when the optical disc is the DVD. In addition, the CD operating distance D_{CD} means an optimal standard distance between the object lens 2 and the CD in the focusing direction F when the optical disc is the CD.

In the example being illustrated, a position of the objective lens 2 is defined so that a distance between the objective lens 2 and the optical disc is equal to an intermediate distance between the DVD operating distance D_{DVD} and the CD operating distance D_{CD} in the inactive state. In other words, the position of the objective lens 2 in a state where the objective lens holder assembly supported by the damper base 10 through the four suspension wires 11 is set to become a middle (neutral) position P_{N} between the DVD operating distance D_{DVD} and the CD operating distance D_{CD}. It is therefore possible to equalize an offset current on operating the CVD with an offset current on operating the CD and it results in reducing a consumed current.

While this invention has thus far been described in conjunction with a preferred embodiment thereof, it will now be readily possible for those skilled in the art to put this invention into various other manners without departing from the scope of this invention. For example, the optical pickup unit according to this invention may be best suitable to optical disc drives, particularly, to thin-type optical disc drives and may be applicable to all of optical disc drives for reading recorded information or for writing information from/to optical discs (CD, CD-ROM, CD-R, CD-RW, DVD-ROM, DVD+R, DVD-R, DVD-RAM, DVD+RW, DVD-RW, or the like). Needless to say, this invention is not restricted to the two-wavelength handling optical pickup units, this invention may be applicable to one-wavelength handling optical pickup units.

## Claims

1. An objective lens driving device (100) of a symmetry type comprising an objective lens (2), an objective lens holder (1) for holding said objective lens, a damper base (10) apart from said objective lens holder in a tangential direction (Tg), and a suspension member (11) elastically supporting said objective lens holder with respect to said damper base, said suspension member consisting of a plurality of suspension wires (11) disposed on both sides of said damper base and said objective lens holder, **characterized in that** said suspension member (11) inclines upward in a direction from said damper base to said objective lens holder by a predetermined angle (θ) in an inactive state.

2. The objective lens driving device as claimed in claim 1, wherein further comprising a top cover (20) for covering an upper surface of all of a fixed portion including said damper base (10) expect for a movable portion including said objective lens holder (1).

3. The objective lens driving device as claimed in any one of claims 1-2, wherein said predetermined angle (θ) is laid in a range between zero degree, exclusive, and five degrees, inclusive.

4. The objective lens driving device as claimed in any one of claims 1-3, said objective lens driving device (100) being mounted on a two-wavelength handling pickup unit (200) enabling to record/reproduce data in/from a plurality of optical discs (DVD, CD) using different wavelengths, wherein a position of said objective lens is defined, in said inactive state, so that a distance (P_{N}) between said optical discs and said objective lens (2) becomes an intermediate distance between an operating distance (D_{DVD}) of a first optical disc (DVD) using a first wavelength and another operating distance (D_{CD}) of a second optical disc (CD) using a second wavelength different from the first wavelength.

5. The objective lens driving device as claimed in any one of claims 1-4, wherein said objective lens holder (1) comprises an upper member (50) and a lower member (55) which are assembled with each other, said lower member (55) having a pair of main bobbin portions (552) symmetrically disposed with respect to an optical axis (A) of a laser beam, said upper member (50) and said lower member (55) having openings (505, 553) for passing through said laser beam, each of said upper member (50) and said lower member (55) having four hook portions (504, 554), wherein said objective lens driving device (100) further comprises:
two tilting coils (4) wound around said pair of main bobbin portions;
two focusing coils (3) wound around said pair of main bobbin portions so as to overlay said two tilting coils;
four tracking coils (5) wound around said four hook portions; and
a magnetic circuit (15, 16) for applying driving forces to said two tilting coils, said two focusing coils, and said four tracking coils according to energizing to said two tilting coils, said two focusing coils, and said four tracking coils.

6. The objective lens driving device as claimed in claim 5, wherein said magnetic circuit (15, 16) comprises:
a yoke (15); and
four magnets (16) which are disposed along the tangential direction (Tg) opposite to each other and which are apart from each other in a tracking direction (Tr) so as to sandwich said objective lens holder (1) in them, each of said four magnets comprising a double pole magnetized magnet.

7. The objective lens driving device as claimed in claim 6, wherein said yoke (15) comprises:
a first rising portion (15-1) opposed to and apart from two of said four tracking coils;
a second rising portion (15-2) opposed to and apart from remaining two of said four tracking coils; and
two third rising portions (15-3), disposed between said first rising portion and said second rising portion, for passing through said pair of main bobbin portions,
wherein two ones of said four magnets (16) are mounted on an inner surface of said first rising portion (15-1) so as to face the two of said four tacking coils (5), remaining two ones of said four magnets (16) being mounted on an inner surface of said second rising portion (15-2) so as to face the remaining two of said four tracking coils (5).

8. The objective lens driving device as claimed in claim 7, wherein said second rising portion (15-2) has an opening (15-2a) for ensuring an optical path (A) of said laser beam.

9. The objective lens driving device as claimed in any one of claims 7-8, wherein said yoke (15) further comprises an extending portion (15-4) for extending in the tangential direction (Tg) from a central portion of said first rising portion (15-1) to cover an upper surface of said damper base (10).

10. The objective lens driving device as claimed in any one of claims 5-9, wherein further comprises:
two first connection terminals (601) for connecting end portions of said two focusing coils (3), said two first connection terminals being disposed in both side surfaces of said objective lens holder (1);
two second connection terminals (602) for connecting end portions to said four tracking coils (5), said two second connection terminals being disposed in said both side surfaces of said objective lens holder (1); and
two third connection terminals (603) for connecting end portions of said two tilting coils (4), said two third connection terminals being disposed in a lower surface of said objective lens holder.

11. The objective lens driving device as claimed in claim 10, wherein said objective lens holder (1) comprises two supporting portions (1-5), disposed at both sides in a tracking direction (Tg), for supporting said suspension member (11).

12. The objective lens driving device as claimed in claim 11, wherein said suspension member consists of four suspension wires, said four suspension wires penetrating said two supporting portions and being fixed to said two supporting portions, one pair of said four suspension wires having tip portions which are electrically connected to said two first connection terminals, another pair of said four suspension wires having tip portions which are electrically connected to said two second connection terminals.

13. The objective lens driving device as claimed in any one of claims 11-12, further comprising two lead wires disposed between said damper base and said objective lens holder, wherein said two lead wires penetrating said two supporting potions and being fixed to said two supporting portions, said two lead wires having tip portions which are bent downwards to be electrically connected to said two third connection terminals.
